# EUROPÄISCHE PATENTSCHRIFT

(11) **EP 1 031 272 B1**
(45) Veröffentlichungstag und Bekanntmachung des Hinweises auf die Patenterteilung: **15.11.2006**
(21) Anmeldenummer: 00101406.7
(22) Anmeldetag: 25.01.2000
(51) Int. Cl.: A01F 12/40

(54) **Verteilvorrichtung einer Zerkleinerungsvorrichtung**
Distribution device for crusher
Dispositif de distribution pour broyeur

(30) Priorität: 16.02.1999 DE 19906454
(43) Veröffentlichungstag der Anmeldung: 30.08.2000
(73) Patentinhaber: DEERE & COMPANY, Moline, Illinois 61265-8098 (US)
(72) Erfinder: Bischoff, Lutz, 66503 Dellfeld (DE)
(74) Vertreter: Holst, Sönke

(56) Entgegenhaltungen:
- DE-A- 3 438 609
- FR-A- 1 239 857
- FR-A- 2 728 759
- US-A- 2 708 582
- US-A- 3 815 823

## Beschreibung

Die Erfindung betrifft eine Verteilvorrichtung einer Zerkleinerungsvorrichtung, mit einem Gehäuse, das einen ersten Bereich und zweiten Bereich aufweist, einem in dem Gehäuse angeordneten Zerkleinerungs- und Förderelement und mehreren Leitblechen zur transversalen Streuung des Fördergutes, die in bestimmter räumlicher Beziehung zum zweiten Bereich des Gehäuses stehen, wobei der zweite Bereich des Gehäuses relativ zum ersten Bereich des Gehäuses um eine erste Achse schwenkbar ist, und Fördergut durch das Förderelement am ersten und zweiten Bereich vorbei in Richtung auf die Leitbleche zu gefördert wird, und wobei die Leitbleche relativ zum ersten Bereich des Gehäuses, separat vom zweiten Bereich des Gehäuses, um eine zweite Achse schwenkbar sind, die parallel zur ersten Achse verläuft und die Leitbleche durch ihre Schwenklagerung mittelbar oder unmittelbar mit dem ersten Bereich des Gehäuses oder dem zweiten Bereich des Gehäuses verbunden sind.

In der DE 34 38 609 A1 ist ein Mähdrescher beschrieben, an dem ein Anbauhäcksler angeordnet ist, der mit einer rotativ angetriebenen Häckslerwelle mit daran befestigten Messern, und einem diese umschließenden Gehäuse versehen ist. Das gehäckselte Stroh tritt durch ein Auswurfgehäuse aus, in dem mehrere Leitbleche befestigt sind. Das Auswurfgehäuse ist um die Häckslerwelle schwenkbar gelagert. Der Austrittsbereich der Häckslerwelle wird durch den Boden des Auswurfsgehäuses definiert, der gemeinsam mit dem Auswurfgehäuse um die Häckslerwelle azimutal verschwenkbar ist. Auf diese Weise sollen die Ausstoßverhältnisse bei allen Schwenkstellungen des Auswurfsgehäuses konstant bleiben.

Ein Nachteil wird darin gesehen, daß dieser Häcksler mit dem zwar um einen begrenzten Winkelbereich schwenkbaren, aber ansonsten starren Auswurfsgehäuse relativ voluminös ist. Daher ist es in der Praxis nötig, den Häcksler bei Schwadablage relativ zur Fahrtrichtung des Mähdreschers nach vorn zu verschieben. Es wird dadurch ein großer Freiraum geschaffen, damit das Stroh zuverlässig von den Schüttlern auf den Boden fallen kann. Dabei wird auch der Strohverteiler in einen Bereich gebracht, wo er bei Straßentransport mit angehängtem Schneidwerk nicht mehr stört. Der wesentliche Nachteil ist die sehr aufwendige Realisierung. Falls der Häcksler fest mit dem Mähdrescher verbunden werden sollte, wie es bei den meisten Mähdreschern der Fall ist, wäre ein Hochschwenken des Auswurfsgehäuses notwendig, um einen Straßentransport des Mähdreschers mit angehängtem Schneidwerkswagen durchführen zu können. Ein Hochschwenken des bekannten Auswurfsgehäuses ist aber aufgrund der Position des Drehpunktes des Auswurfsgehäuses nicht realisierbar.

In der US 27 08 582 A und der FR 12 39 857 A sind Verteilvorrichtungen offenbart, bei denen der hintere Teil des Bodens des Auswurfgehäuses und die Leitbleche separat verschwenkbar sind. Bei einer Änderung des Austrittswinkels des Häckselguts sind somit zwei verschiedene Einstellungen durchzuführen, was zeitaufwendig ist. Auch ist nicht immer gewährleistet, daß das Häckselgut die Leitbleche im richtigen Winkel trifft.

Die Aufgabe der Erfindung ist, eine verbesserte Verteilvorrichtung einer Zerkleinerungsvorrichtung zu schaffen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es sind zwei separat schwenkbare Elemente vorgesehen. Zum einen handelt es sich dabei um den zweiten Bereich des Gehäuses, der mit dem Zerkleinerungs- und Förderelement zusammenwirkt, um das Fördergut, das insbesondere geerntetes Material ist, wie Stroh, in Richtung auf die Leitbleche hin zu transportieren. Zum anderen sind auch die Leitbleche, separat vom zweiten Bereich des Gehäuses, schwenkbar angebracht.

Das Fördergut wird während des Betriebes der Verteilvorrichtung durch einen Spalt zwischen dem Zerkleinerungs- und Förderelement und dem ersten und zweiten Bereich des Gehäuses der Verteilvorrichtung hindurchgeführt und dann ausgeworfen. Es erreicht die Leitbleche, die dazu dienen, das Fördergut möglichst gleichmäßig in seitlicher Richtung, d.h. transversal zur Förderrichtung, zu verteilen. Der zweite Bereich des Gehäuses ist schwenkbar angeordnet, um ihn derart positionieren zu können, daß das Fördergut möglichst lange geführt und gezielt auf die Leitbleche geworfen wird. Die durch das Förderelement erzeugte Luftströmung wird dann ebenfalls optimal in die gewünschte Richtung, d.h. auf die Leitbleche zu, geführt, und unterstützt den Auswurf des Fördergutes. Weiterhin verhindert der zweite Bereich des Gehäuses einen unbeabsichtigten Eingriff in das Zerkleinerungs- und Förderelement. Der zweite Bereich des Gehäuses erstreckt sich, wie vorzugsweise auch der erste Bereich des Gehäuses, in der Regel über die gesamte Breite des Zerkleinerungs- und Förderelements. Durch Verschwenken des zweiten Bereichs des Gehäuses ist die Auswurfrichtung des Fördergutes wählbar. Der Strohverteiler kann in Arbeitsposition in verschiedenen Neigungen fixiert werden. Ziel ist es, durch den zweiten Bereich die horizontale Auswurfrichtung aus dem Häcksler so zu beeinflussen, daß das gehäckselte Stroh bei jeder Neigung des Verteilers optimal durch die Leitbleche gerichtet wird.

Die Leitbleche sind erfindungsgemäß derart schwenkbar angeordnet, daß sie in bestimmter räumlicher Beziehung zum zweiten Bereich des Gehäuses stehen. Normalerweise wird der Strohverteiler mit den Leitblechen in seiner Neigung gegenüber der Horizontalen eingestellt, um die Streubreite beeinflußen zu können. Der zweite Bereich des Gehäuses paßt sich dann der Neigung des Strohverteilers an. So ist gewährleistet, daß die Leitbleche vom Fördergut optimal getroffen werden. Die Leitbleche bestehen gewöhnlich aus einer Mehrzahl vertikal angeordneter Bleche, deren Längsachse sich in Richtung der Transportrichtung des Fördergutes erstreckt. Die Bleche weisen in der Regel eine Krümmung in horizontaler Richtung auf, und können in ihrer lateralen Position verstell- oder verbiegbar gestaltet sein.

Die Leitbleche sind um eine zweite Achse schwenkbar, die parallel zur ersten Achse verläuft, und von ihr beabstandet ist. Die zweite Achse kann die Leitbleche mit dem zweiten Bereich des Gehäuses verbinden, oder alternativ eine mittelbare oder unmittelbare Verbindung zwischen den Leitblechen und dem ersten Teil des Gehäuses herstellen. Im ersten Fall könnten die Leitbleche in eine Außerbetriebsstellung in Richtung auf den ersten Bereich des Gehäuses zu verschwenkt werden, während sie im zweiten Fall in entgegengesetzter Richtung, vom zweiten Bereich des Gehäuses fort, verschwenkbar sein können.

Es ist eine azimutale Arretierung des zweiten Bereichs des Gehäuses und der Leitbleche vorgesehen, wobei der zweite Bereich des Gehäuses und die Leitbleche miteinander form- oder kraftschlüssig verbindbar gestaltet werden. Man erreicht dann, - wenn die Leitbleche schwenkbar am ersten Bereich des Gehäuses gelagert sind - daß durch eine einzige Arretierung beide Schwenkwinkel festgelegt werden, nämlich der des zweiten Bereichs, und der der Leitbleche. Sind die Leitbleche hingegen schwenkbar am zweiten Bereich gelagert, könnte eine azimutale Arretierung der Leitbleche und des zweiten Bereichs durch eine lösbare Verbindung zwischen dem ersten Bereich des Gehäuses und den Leitblechen erfolgen. Außerdem ist denkbar, die Leitbleche drehbar am Gehäuse zu lagern, und auch zur Arretierung mit dem Gehäuse zu verbinden. Die Stellung des zweiten Bereichs wird dann durch eine entsprechende Kupplung mit den Leitblechen festgelegt. Als Verbindung kommt insbesondere eine Rastverbindung in Frage, wobei mehrere unterschiedliche Rastpositionen vorgesehen sein können, die unterschiedliche Auswurfrichtungen des Fördergutes bereitstellen.

Die Vorteile der Erfindung bestehen insbesondere darin, daß bei kompakten Aufbau und gutem Auswurf des Fördergutes die Leitbleche separat schwenkbar sind, und daher zum Straßentransport nach oben oder unten verschwenkt werden können. Es ist somit kein unvorteilhaftes starres, voluminöses Auswurfsgehäuse, und keine Verschiebung der Verteilvorrichtung in Betriebs- und Außerbetriebsstellung mehr nötig.

Die Erfindung kann bei vertikal und horizontal orientierten ersten und zweiten Achsen angewendet werden. Das Förderelement, das in der Regel ebenfalls rotativ angetrieben wird, dreht sich vorzugsweise um eine Achse, die ebenfalls parallel zur ersten und zweiten Achse verläuft. Die Erfindung ist somit bei Förderelementen mit horizontal orientierten Drehachsen anwendbar, wie auch bei Förderelementen mit vertikal orientierten Drehachsen.

Wie bereits erläutert wurde, ist zur Erzielung einer möglichst gleichmäßigen Verteilung des Förderguts quer zur Förderrichtung eine optimale Ausrichtung der Leitbleche in bezug auf den zweiten Bereich hilfreich. Als besonders günstig hat sich eine Position erwiesen, in der eine imaginäre Verlängerung eines ersten Randes der Leitbleche wenigstens näherungsweise tangential zu der Bewegungsbahn des Fördergutes verläuft, die sich durch das Förderelement ergibt. Genau tangential vom Förderelement ausgeworfenes Fördergut erreicht somit den ersten Rand der Leitbleche, während Fördergut, das (durch das im Regelfall rotativ angetriebene Förderelement in dessen Drehrichtung) etwas weiter vom Rand weg, in Richtung auf die Mittelachse der Leitbleche zu gefördert wird, das Leitblech im Abstand vom Rand trifft. Auf diese Weise ist eine Beaufschlagung des gesamten Leitblechs mit Fördergut erreicht. In der Regel ist der erste Rand der Leitbleche der in vertikaler Richtung gesehen untere Rand. Da unterschiedliche Auswurfrichtungen wünschenswert sind, wird die genannte geometrische Bedingung vorzugsweise in mehreren Raststellungen zwischen dem zweiten Bereich des Gehäuses und der Leitbleche erreicht.

Es wird vorgeschlagen, am zweiten Bereich oder am Gehäuse ein erstes Rastelement vorzusehen, das zur Aufnahme eines komplementären, mit den Leitblechen bzw. dem zweiten Bereich verbundenen zweiten Rastelements eingerichtet ist. Dabei ist bevorzugt, daß der zweite Bereich (oder das Gehäuse, bzw. die Leitbleche) mehrere Rastelemente aufweist bzw. aufweisen, mit denen das jeweils andere Rastelement selektiv verrastbar ist, um unterschiedliche Auswurfrichtungen zu erzielen. Die Rastelemente sind vorzugsweise am seitlichen Rand des ersten oder zweiten Bereichs vorgesehen, könnten aber auch mittig oder an einer anderen Stelle daran angebracht sein, insbesondere wenn die Verteilvorrichtung in zwei seitlich nebeneinander angeordnete Vorrichtungen aufgeteilt ist.

Zur Kopplung und ggf. Verrastung des zweiten Bereichs des Gehäuses mit den Leitblechen sind verschiedene Möglichkeiten denkbar. Beispielsweise kann eine Kette Verwendung finden, die einen Endes mit den Leitblechen (oder dem zweiten Bereich) verbunden ist, und deren Glieder selektiv mit dem zweiten Bereich (oder den Leitblechen) verhakbar sind. Auch können Haken oder Nocken unterschiedlicher Länge verwendet werden, oder an unterschiedlichen Positionen arretiert werden. Möglich ist auch eine Stange, die in eine oder mehrere entsprechende Aussparungen eingreift oder an Gleitelementen anliegt.

Falls unterschiedliche Auswurfrichtungen gewünscht sind, wird vorgeschlagen, daß die ersten Rastelemente Aussparungen enthalten, die unterschiedliche Abstände von der ersten und zweiten Achse aufweisen. Die Positionen der Aussparungen sind derart gewählt, daß die gewünschten Azimutalwinkel des zweiten Bereichs und der Leitbleche erreicht werden.

Weiterhin ist - aus Fertigungsgründen und um einen sich in Richtung auf die Leitbleche zu öffnenden Auswurf-Trichter am Auswurfbereich des zweiten Bereichs zu erzielen - vorgeschlagen, daß der zweite Bereich im wesentlichen gerade, d.h. mit einer flachen, nicht gekrümmten wirksamen Oberfläche versehen ist. In diesem Fall bietet sich an, die zweite Achse und die Rastelemente derart zu positionieren, daß eine imaginäre Verlängerung eines ersten (in der Regel unteren) Randes der Leitbleche die erste Achse schneidet, um eine optimale transversale Streuung des Fördergutes zu erreichen. Alternativ wäre auch ein gebogener, in etwa dem Hüllkreis des Förderelements angepaßter zweiter Bereich denkbar.

Das Zerkleinerungs- und Förderelement kann eine Häckslerwelle mit daran befestigten Messern sein, die mit Gegenmessern wechselwirken.

Schließlich wird vorgeschlagen, daß mindestens eines der Leitbleche gekrümmt ist und das dem Förderelement abgewandte Ende dieses Leitblechs gegenüber der Flußrichtung des Förderguts abgeschrägt ist. Auf diese Weise wird erreicht, daß ein auf das Leitblech treffendes Teilchen des Förderguts um einen Winkel abgelenkt wird, der von der Position (Höhe senkrecht zur Transportrichtung des Förderguts) und Flugrichtung (Auftreffwinkel des Teilchens) des Teilchens beim Aufprall auf das Leitblech abhängt, da das jeweilige Teilchen durch die Schrägung um einen von diesen Parametern abhängigen Winkel abgelenkt wird und das Leitblech früher oder später verläßt. Das Fördergut verläßt die Leitbleche daher in einem Streuwinkelbereich. Es kann ein Teil der Leitbleche, oder alle Leitbleche derart ausgestaltet werden.

Die Erfindung findet insbesondere bei Erntemaschinen, wie Mähdreschern, Verwendung.

In den Zeichnungen sind zwei nachfolgend näher beschriebene Ausführungsbeispiele der Erfindung schematisch dargestellt. Es zeigen:
- Fig. 1: eine Erntemaschine mit einer erfindungsgemäßen Verteilvorrichtung;
- Fig. 2: einen vertikalen Schnitt durch die Verteilvorrichtung der Figur 1;
- Fig. 3: eine Draufsicht auf ein Leitblech;
- Fig. 4: eine Seitenansicht des Leitblechs der Figur 3;
- Fig. 5: eine Seitenansicht einer Verteilvorrichtung nach einer zweiten Ausführungsform der Erfindung.

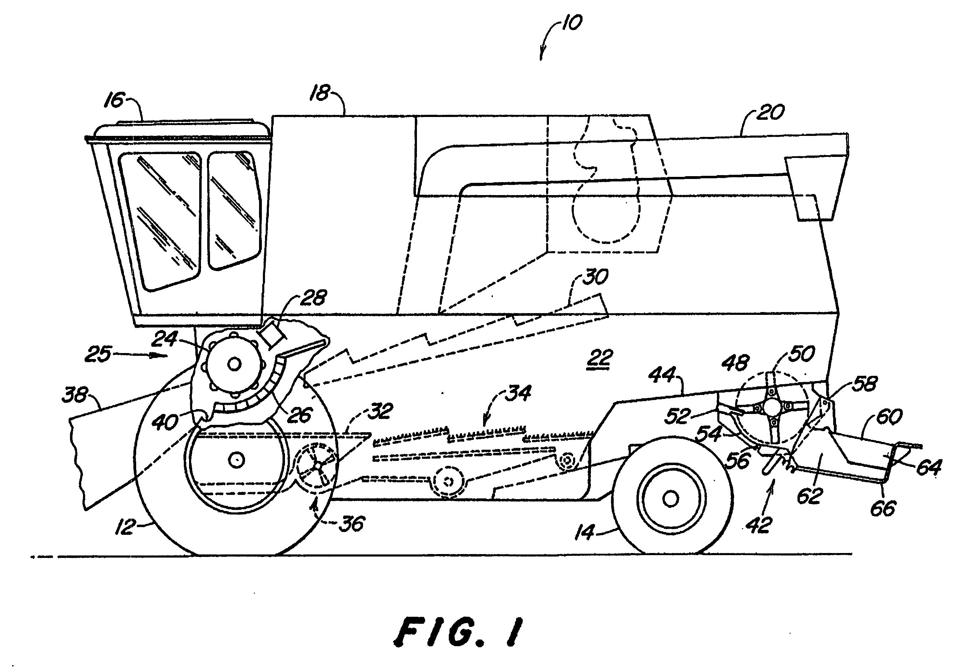

Eine in Figur 1 gezeigte Erntemaschine 10 in der Form eines Mähdreschers ist auf vorderen angetriebenen und rückwärtigen lenkbaren Rädern 12 bzw. 14 getragen und weist eine Fahrerkabine 16 auf, von der aus sie von einem Fahrer bedient werden kann. Anstatt eines Mähdreschers könnte ebenso eine stationäre Dreschmaschine, eine Versuchs-Dreschanlage oder dergleichen in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 in eine Ausfallhaube 44 des Mähdreschers 10 gefördert werden und leichte Bestandteile mittels eines Gebläses 36 von den Sieben 34 auf den Erdboden geblasen werden. Auf dem Erdboden liegendes oder stehendes Erntegut wird über einen Schrägförderer 38 und eine Steinfangmulde 40 der Dreschtrommel 24 zugeführt, nachdem es von einer nicht gezeigten Erntegutbergungsvorrichtung vom Erdboden aufgenommen worden ist. Anstelle der Schüttler 30 können auch eine oder mehrere rotierende Abscheidetrommeln vorgesehen sein.

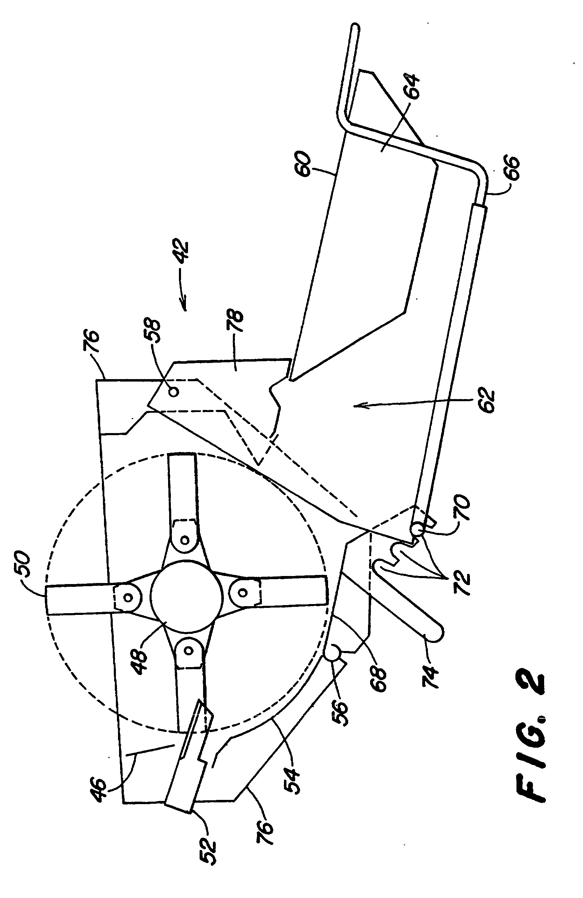

Am hinteren Ende der Ausfallhaube 44 ist eine Verteil- und Zerkleinerungsvorrichtung 42 vorgesehen, in die die von den Schüttlern 30 geförderten Bestandteile des Ernteguts, wie z.B. Stroh, aufgrund der Einwirkung der Schwerkraft gelangen. Die Verteil- und Zerkleinerungsvorrichtung 42 ist in Figur 2 detaillierter dargestellt. Das im folgenden als Fördergut bezeichnete Erntegut, das in die in einem Gehäuse 76 angeordnete Zerkleinerungs- und Verteilvorrichtung 42 gelangt, wird von einer schnell im Gegenuhrzeigersinn rotierenden Trommel 48 und Messern 50 erfaßt. Auf der Trommel 48 sind gleichmäßig über den Umfang verteilt mehrere Messer 50 beweglich angeordnet. Das Fördergut wird von der Trommel 48 und den Messern 50 mitgenommen und an einer feststehenden Leiste mit Gegenmessern 52 vorbeigezogen. Durch die Messer 50 und die Gegenmesser 52 wird das Fördergut in kurze Abschnitte gehäckselt. Die Trommel 48 mit den Messern 50 wirkt im Ergebnis als Zerkleinerungs- und Förderelement. Es gibt auch Bauformen von Häckslern, bei denen anstelle der beweglichen Messer 50 auf der Trommel 48 nur feststehende Mitnehmerplatten angeordnet sind. Diese Mitnehmerplatten führen das Stroh durch feststehende Gegenmesser. Die erfindungsgemäße Lehre ist auch auf diese Bauformen anwendbar.

Das gehäckselte Fördergut wird durch einen engen Spalt zwischen den Messern 50 und einem ersten Bereich 54 des Gehäuses 76 der Verteil- und Zerkleinerungsvorrichtung 42 in einer Kreisbahn geführt. Das Gehäuse 76 ist an der Unterseite der Ausfallhaube 44 befestigt, und umschließt die Trommel 48. Der erste Bereich 54 des Gehäuses 76 ist somit ortsfest an der Erntemaschine 10 angebracht. Das Fördergut wird anschließend durch die Trommel 50 an einem zweiten Bereich 68 des Gehäuses 76 vorbeigeführt, der an einer ersten, zur Zeichenebene orthogonalen Achse 56 schwenkbar am Gehäuse 76 angelenkt ist.

Der erste Bereich 54 und der zweite Bereich 68 bilden einen sogenannten Häckslerboden, an dessen Ende das Fördergut die Kreisbahn verläßt und nach hinten auf den Erdboden ausgeworfen wird. Der zweite Bereich 68 des Gehäuses 76 ist ein flaches Blech, das sich über die gesamte wirksame Breite der Verteil- und Zerkleinerungsvorrichtung 42 erstreckt. Die Hauptmenge des Förderguts verläßt die Kreisbahn am Ende des zweiten Bereichs 68 tangential. Ein Teil wird aber durch die Messer 50 und die durch ihre Rotation resultierende Ventilation weiter herumgerissen. Es ergibt sich somit eine gewisse vertikale Streuung in der horizontalen Auswurfrichtung.

Am hinteren Ende der Zerkleinerungs- und Verteilvorrichtung 42 ist ein sogenannter Verteiler 62 angeordnet. Durch ihn soll das gehäckselte Fördergut möglichst gleichmäßig auf die Schnittbreite der Erntemaschine 10 quer zur Fahrtrichtung verteilt werden. Der Verteiler 62 weist ein um eine horizontale, senkrecht zur Zeichenebene verlaufende Achse 58, die im folgenden als zweite Achse bezeichnet wird, schwenkbares Bodenblech 60 auf. Die Neigung des gesamten Verteilers 62 relativ zum Erdboden kann so eingestellt werden. Unterhalb des Bodenblechs 60 ist eine Anzahl von Leitblechen 64 angeordnet. Die Leitbleche 64 sind längliche, sich senkrecht zum Bodenblech 60 nach unten erstreckende Bleche, die eine nach rechts oder nach links gerichtete Krümmung aufweisen. Zusätzlich können die Leitbleche 64 in ihrer Position quer zur Fahrtrichtung der Erntemaschine 10 verstellt werden. Durch die Krümmung und die Orientierung wird das Fördergut beim Passieren der Leitbleche 64 quer zur Fahrtrichtung der Erntemaschine 10 abgelenkt und so über eine größere Breite als die, die dem Arbeitskanal der Erntemaschine 10 entspricht, auf dem Boden verteilt.

Im Ergebnis wirkt die Trommel 48 mit den Messern 50 und dem ersten Bereich 54 und zweiten Bereich 68 des Gehäuses 76 als Zerkleinerungs- und Fördervorrichtung, und der zweite Bereich 54 sowie der Verteiler 62 mit den Leitblechen 64 als Verteilvorrichtung für das Fördergut.

Das gehäckselte Fördergut soll möglichst gleichmäßig über die gesamte Schnittbreite der Erntemaschine 10 verteil werden. Die gleichmäßige Verteilung ist Voraussetzung dafür, daß bei nachfolgenden Arbeitsgängen (Bodenbearbeitung oder Direktsaat ohne Bodenbearbeitung) keine Verstopfungen der Arbeitsmaschinen auftreten und die Bodenqualität über die gesamte Breite gleich bleibt, d.h. eine gleichmäßige Speicherfähigkeit von Feuchte und ein homogener Verrottungsprozeß erzielt wird. Bei heutigen Erntemaschinen 10, insbesondere Mähdreschern ist die Schnittbreite wesentlich größer als die Breite des Arbeitskanals (die Schneidwerke sind bis 9 m breit, und die Kanalbreite ist bis etwa 1,6 m). Kritisch ist insbesondere die Verteilung sehr feuchten oder grünen und schweren Förderguts, da der Luftwiderstand das Fördergut nicht so stark verwirbeln kann wie trockenes Fördergut, das nach Verlassen der Leitbleche 64 durch den Luftwiderstand gebremst und etwas verwirbelt wird, und dadurch als gleichmäßige Schicht auf dem Erdboden zu liegen kommt. Das feuchte oder grüne Fördergut verläßt die Leitbleche 64 in unerwünschter Weise strahlenförmig und wird so gebündelt bis auf den Boden geworfen. Dabei entstehen deutlich sichtbare Streifen hinter der Erntemaschine 10, die sich den einzelnen Leitblechen 64 zuordnen lassen.

Zur Lösung des beschriebenen Problems ist eine Kopplung zwischen dem zweiten Bereich 68 des Gehäuses 76 und den mit dem Verteiler 62 verbundenen Leitblechen 64 vorgesehen. An einem seitlichen Ende (oder beiden Enden) des zweiten Bereichs 68 sind unterseitig Hebel 74 angebracht. Außerdem sind (in Vorwärts-Fahrtrichtung der Erntemaschine 10) hinter den Hebeln 74 Aussparungen 72 an der Unterseite des zweiten Bereichs 68 vorgesehen. Die Aussparungen 72 sind kammartig in die Unterseite des zweiten Bereichs 68 eingebracht und weisen jeweils unterschiedliche Abstände von der ersten Achse 56 auf. Die Tiefe der Aussparungen 72 ist ebenfalls jeweils unterschiedlich, um die Neigung der Leitbleche 64 und des zweiten Bereichs 68 in die gewünschte Relation zu bringen, wie weiter unten ausgeführt. Jeweils eine dieser Aussparungen 72 nimmt eine Querstange 70 auf, die mit dem Verteiler 62 verbunden ist. Die Querstange 70 erstreckt sich über die gesamte Breite des Verteilers 62, und ist über Stangen 66 und zwei Seitenbleche 78, die am (in Fahrtrichtung der Erntemaschine 10) linken und rechten Rand des Verteilers 62 angebracht sind, mit dem Bodenblech 60 und den daran fixierten Leitblechen 64 verbunden. Mit der Auswahl der Aussparung 72 wird die Neigung des Verteilers 62 festgelegt. Gleichzeitig wird dabei die Neigung des zweiten Bereichs 68 des Gehäuses 76 und damit die horizontale Auswurfrichtung des gehäckselten Förderguts an die Verteilerneigung angepaßt. Um bei allen möglichen Arbeitsstellungen des Verteilers 62 eine optimale Anpassung der Auswurfrichtung zu erhalten, sind die Positionen der ersten Achse 56, der zweiten Achse 58 und der Aussparungen 72 so ausgewählt, daß folgende Kriterien erfüllt werden: Die gedachte Verlängerung der unteren Kante der Leitbleche 64 sollte bei allen Stellungen des Strohverteilers 62 die Bewegungskreisbahn, die sich durch die Führung des Förderguts durch den ersten Bereich 54 und zweiten Bereich 68 ergibt, tangential berühren. In dem Bereich, wo diese gedachte Verlängerung die Kreisbahn tangential berührt, befindet sich die erste Achse 56. Kurz davor endet der mit dem Gehäuse 76 fest verbundene erste Bereich 54. Der Übergang vom feststehenden ersten Bereich 54 zum zweiten Bereich 68 erfolgt mit einem kleinen Absatz so, daß der Spalt zwischen beiden Bereichen 54, 68 im Schatten der Bewegungsbahn des Förderguts liegt. Dadurch kann sich kein Fördergut im Spalt festsetzen. Die Aussparungen 72 sind so mit dem zweiten Bereich 68 verbunden, daß der zweite Bereich 68 das Fördergut stets in den unteren Bereich der Leitbleche 64 richtet. Im Idealfall ist der zweite Bereich 68 parallel zum unteren Rand der Leitbleche 64 gerichtet.

Das Verstellen der Neigung des Verteilers 62 erfolgt folgendermaßen: während der Verteiler 62 in seiner Position festgehalten wird, wird der Hebel 74 im Gegenuhrzeigersinn bewegt, so daß die Querstange 70 außer Eingriff mit der jeweils von ihr besetzten Aussparung 72 gerät. Dann kann der Verteiler 62 derart verschwenkt werden, daß die Querstange in die Nähe einer anderen (gewünschten) Aussparung 72 gerät, und der Hebel 74 kann im Uhrzeigersinn verschwenkt, oder einfach losgelassen werden, so daß er sich durch Einwirkung der Schwerkraft im Uhrzeigersinne dreht. Die Arretierung der Querstange 70 in der Aussparung 72 erfolgt ebenfalls durch die Schwerkraft, die ein Drehmoment erzeugt, das den Verteiler 62 im Uhrzeigersinn zu drehen versucht, während sie den zweiten Bereich 68 ebenfalls in diese Richtung dreht. Im Ergebnis wird die Querstange 70 gegen den Bodenbereich der jeweiligen Aussparung 72 gedrückt, und der zweite Bereich 68 und der Verteiler 62 sind relativ zueinander, und zum ersten Bereich 54 arretiert. Um auch bei unebenem Erdboden ein unbeabsichtigtes Lösen der Querstange 70 aus ihrer Aussparung 72 zu verhindern, kann eine zusätzliche Arretierung des zweiten Bereichs 68 und/oder des Verteilers 62 zweckmäßig sein. Sie kann durch eine (Flügel-) Mutter auf einem die zweite Achse 58 bildenden Bolzen, und/oder eine entfernbare Abdeckung (schwenkbare Leiste, Blech, Feder, oder dergleichen) an der Unterseite der Aussparungen 72 sein, die ein Herausspringen der Querstange 70 aus der jeweiligen Aussparung 72 verhindert. Die zusätzliche Arretierung ist vor einer Verstellung der Neigung des Verteilers 62 zu lösen und danach wieder in Position zu bringen. Alternativ oder zusätzlich kann der Hebel 74 durch eine Feder im Uhrzeigersinn gespannt werden, um eine zuverlässige Arretierung zu erhalten. Wenn eine Feder den Hebel 74 in Uhrzeigerrichtung zieht, unterstützt sie die Schwerkraft, und sorgt dafür, daß der Hebel 74 nur schwer aus der Aussparung 72 herausspringen kann. Es kann eine Zugfeder unterhalb des zweiten Bereichs 68 des Gehäuses 76, oder eine Drehfeder um die erste Achse 56 verwendet werden.

Aufgrund der Positionierung der zweiten Achse 58 kann der gesamte Verteiler 62 im Gegenuhrzeigersinn vom zweiten Bereich 68 vertikal nach oben verschwenkt werden. Wie aus Figur 1 erkennbar ist, kann der Verteiler 62 vertikal nach oben an die Rückwand der Erntemaschine 10 geschwenkt (und mit nicht in der Zeichnung dargestellten Mitteln dort arretiert) werden, so daß er z.B. beim Straßentransport der Erntemaschine 10 insbesondere mit angehängtem Schneidwerkswagen nicht stört.

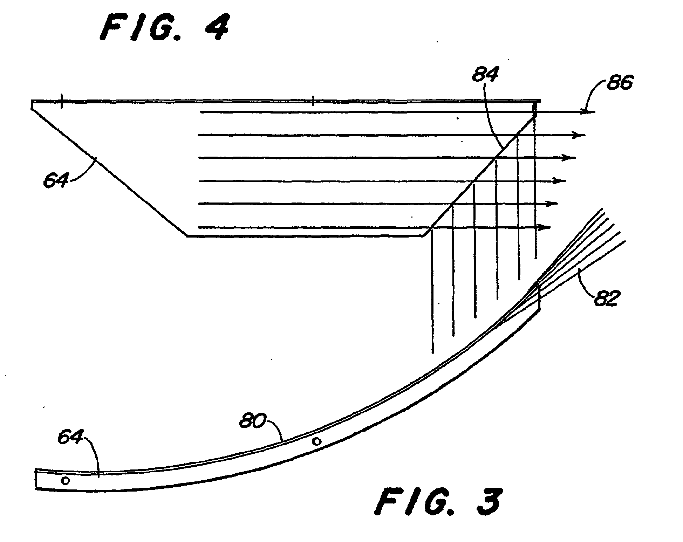

Die Leitbleche 64 besitzen eine Krümmung 80, die in Figur 3 wiedergegeben ist. Das gehäckselte Fördergut wird entsprechend der Krümmung 80 in einer Kurvenbahn geführt. Am Ende der Leitbleche 64 verläßt das Fördergut die Kurvenbahn tangential und wird so gegenüber der Fahrtrichtung der Erntemaschine 10 seitlich abgelenkt auf das Feld geworfen. Bei der dargestellten Ausführungsform verläuft das in Figur 4 erkennbare Ende des Leitblechs 64 schräg unter einem Winkel von etwa 45° gegenüber der durch Pfeile 86 angedeuteten Flußrichtung des Förderguts. Dadurch wird das Fördergut im oberen Bereich des Leitblechs 64 weiter (d.h. länger) in der Kurvenbahn geführt als im unteren. Da das Fördergut die Kurvenbahn unten früher verläßt als im oberen Bereich, wird es nicht so weit seitlich abgelenkt. Auf diese Weise verläßt das Fördergut die Leitbleche 64 ohne Energieverlust in einem bestimmten Streuwinkel 82, und nicht als gebündelter Strahl. Die beschriebene Wirkung wird besonders gut erzielt, wenn das gehäckselte Fördergut möglichst quer zur Krümmung durch die Leitbleche 64 geführt wird. Das wird durch die oben beschriebene Lösung zur Anpassung der horizontalen Auswurfrichtung des Strohs erreicht.

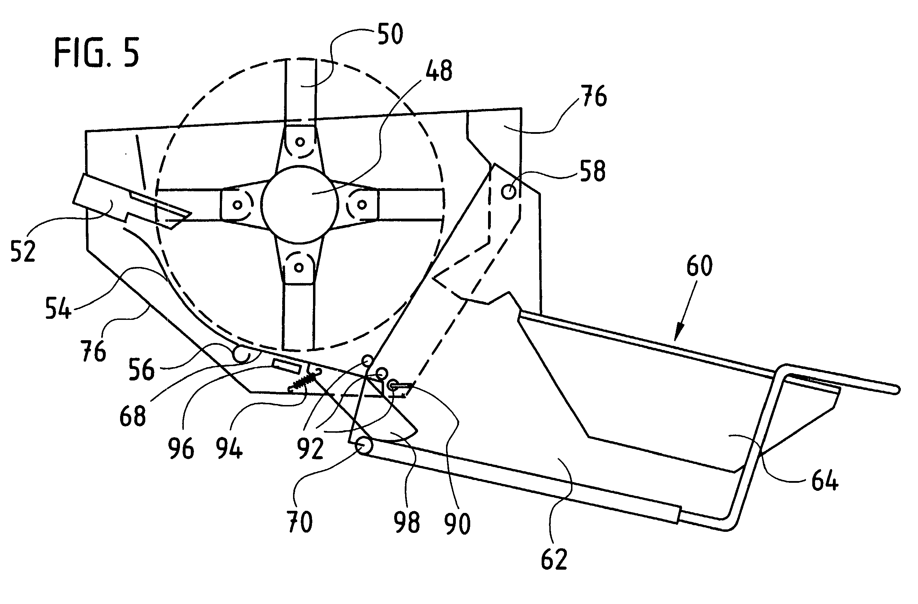

In Figur 5 ist eine Verteilvorrichtung nach einer zweiten Ausführungsform der Erfindung wiedergegeben. Sie entspricht in ihrem grundsätzlichen Aufbau der in den vorhergehenden Figuren gezeigten ersten Ausführungsform, jedoch ist die azimutale Arretierung der Leitbleche 64 auf andere Weise realisiert. Mit dem Gehäuse 76 ist der Verteiler 62 mit den Leitblechen 64 um die Achse 58 schwenkbar verbunden. Die Seitenwand des Verteilers 62 weist kreisförmig um die Achse 58 herum angeordnete Aussparungen (im konkreten Bohrungen) 92 auf, durch die ein Bolzen 90 steckbar ist. Der Bolzen 90 durchdringt weiterhin eine Bohrung in einer seitlichen Außenwand des Gehäuses 76, die aber aus Gründen der Übersichtlichkeit nicht mit eingezeichnet ist. Es sind mehrere Aussparungen 92 vorhanden, so daß auswählbar ist, welche von ihnen - durch Schwenken des Verteilers 62 - mit der Bohrung in der seitlichen Außenwand des Gehäuses 76 in Ausrichtung gebracht wird. Durch diese Aussparung wird der Bolzen 90 ° gesteckt. Auf diese Weise wird die Winkelstellung des Verteilers 62 auswählbar festgelegt. Es können Mittel vorhanden sein, den Bolzen 90 in der jeweils ausgewählten Öffnung 92 zu arretieren, wie Splinte. Das Ziel und die prinzipielle Funktion der zweiten Ausführungsform besteht ebenfalls darin, daß der Auslaufbereich des Häckslerbodens und damit die Abgaberichtung des Häckselgutes entsprechend der Neigung des Verteilers so angepaßt wird, dass das Häckselgut immer optimal durch die Leitbleche 64 geführt wird.

Die Stellung des zweiten Bereichs 68 des Gehäuses 76, der wie in der ersten Ausführungsform an seiner Vorseite um die erste Achse 56 schwenkbar mit dem Gehäuse 76 verbunden ist, wird durch an der Hinterseite des zweiten Bereichs 68 angeordnete Gleitstücke 98 festgelegt, die auf einer mit dem Verteiler 62 verbundenen Querstange 70 aufliegen. Auf diese Weise wird die Stellung des zweiten Bereichs 68 durch die Stellung des Verteilers 62 bestimmt. Eine Feder 94 ist mit dem Gehäuse 76 und dem zweiten Bereich 68 verbunden und sorgt dafür, daß die Gleitstücke 98 stets korrekt auf der Querstange 70 aufliegen. Eine zweite Feder kann auf der anderen Seite der Verteilvorrichtung angeordnet sein. Seitlich am zweiten Bereich 68 angeordnete Anschläge 96 wirken mit der nicht eingezeichneten Seitenwand des Gehäuses 76 zusammen und definieren einen maximalen Schwenkbereich des zweiten Bereichs 68. Eine Begrenzung des Schwenkbereichs ist insbesondere bei zum Transport nach oben geschwenktem Verteiler notwendig. Eine andere Möglichkeit der Begrenzung des Schwenkbereichs besteht in Zungen an den Gleitstücken oder dem Auslaufbereich, welche in entsprechende Aussparungen in den Seitenwänden eingreifen.

## Patentansprüche

1. Verteilvorrichtung einer Zerkleinerungsvorrichtung, mit einem Gehäuse (76), das einen ersten Bereich (54) und zweiten Bereich (68) aufweist, einem in dem Gehäuse (76) angeordneten Zerkleinerungs- und Förderelement und mehreren Leitblechen (64) zur transversalen Streuung des Fördergutes, die in bestimmter räumlicher Beziehung zum zweiten Bereich (68) des Gehäuses (76) stehen, wobei der zweite Bereich (68) des Gehäuses (76) relativ zum ersten Bereich (54) des Gehäuses (76) um eine erste Achse (56) schwenkbar ist, und Fördergut durch das Förderelement am ersten (54) und zweiten Bereich (68) vorbei in Richtung auf die Leitbleche (64) zu gefördert wird, und wobei die Leitbleche (64) relativ zum ersten Bereich (54) des Gehäuses (76), separat vom zweiten Bereich (68) des Gehäuses (76), um eine zweite Achse (58) schwenkbar sind, die parallel zur ersten Achse (56) verläuft und die Leitbleche (64) durch ihre Schwenklagerung mittelbar oder unmittelbar mit dem ersten Bereich (54) des Gehäuses (76) oder dem zweiten Bereich (68) des Gehäuses (76) verbunden sind, **dadurch gekennzeichnet, daß** das Gehäuse (76) oder der zweite Bereich (68) des Gehäuses (76) und die Leitbleche (64) miteinander formschlüssig verbindbar, insbesondere verrastbar sind.

2. Verteilvorrichtung nach Anspruch 1, **dadurch gekennzeichnet, daß** das Gehäuse (76) oder der zweite Bereich (68) des Gehäuses (76) und die Leitbleche (64) derart miteinander verrastbar sind, daß in mehreren Raststellungen eine imaginäre Verlängerung eines ersten, vorzugsweise unteren Randes der Leitbleche (64) wenigstens näherungsweise tangential zu der Bewegungsbahn des Fördergutes verläuft, die sich durch das Förderelement im Zusammenwirken mit dem zweiten Bereich (68) des Gehäuses (76) ergibt.

3. Verteilvorrichtung nach einem der Ansprüche 1 bis 2, **dadurch gekennzeichnet, daß** vorzugsweise am seitlichen Rand des zweiten Bereichs (68) oder des Gehäuses (76) ein erstes Rastelement oder mehrere erste Rastelemente angebracht ist oder sind, das oder die zum Zusammenwirken mit einem komplementären, mit den Leitblechen (64) verbundenen zweiten Rastelement, insbesondere einer Stange (70) oder einer Aussparung (92), eingerichtet ist oder sind.

4. Verteilvorrichtung nach Anspruch 3, **dadurch gekennzeichnet, daß** die ersten Rastelemente Aussparungen (72, 92) enthalten, die insbesondere unterschiedliche Abstände von der ersten Achse (56) und der zweiten Achse (58) aufweisen.

5. Verteilvorrichtung nach einem der Ansprüche 1 bis 4, **dadurch gekennzeichnet, daß** der zweite Bereich (68) im wesentlichen gerade ist und die zweite Achse (58) und die Rastelemente derart positioniert sind, daß eine imaginäre Verlängerung eines ersten Randes der Leitbleche (64) die erste Achse (56) schneidet.

6. Verteilvorrichtung nach einem der vorhergehenden Ansprüche, **dadurch gekennzeichnet, daß** der zweite Bereich (68) beispielsweise durch Gleitelemente (98) und/oder eine in Aussparungen (72) eingreifende Stange (70) derart mit den Leitblechen (64) gekoppelt ist, daß seine Stellung von der Stellung der Leitbleche (64) abhängt.

7. Verteilvorrichtung nach einem der vorhergehenden Ansprüche, **dadurch gekennzeichnet, daß** das Zerkleinerungs- und Förderelement eine Trommel (48) mit daran befestigten Messern (50) umfaßt, die vorzugsweise mit Gegenmessern (52) zusammenwirken.

8. Verteilvorrichtung nach einem der vorhergehenden Ansprüche, **dadurch gekennzeichnet, daß** mindestens eines der Leitbleche (64) gekrümmt ist und das von Förderelement abgewandte Ende dieses Leitblechs (64) gegenüber der Flußrichtung des Förderguts abgeschrägt ist.

9. Kombination aus einer Erntemaschine (10), insbesondere einem Mähdrescher, und einer Verteilvorrichtung nach einem der vorhergehenden Ansprüche.

## Claims

1. Distributor of a chopper with a housing (76), which has a first region (54) and a second region (68), with a chopping and conveying element arranged in the housing (76) and several guide vanes (64) for the transverse dispersal of the conveyed material, which stand in a defined spatial relation to the second region (68) of the housing (76), wherein the second region (68) of the housing (76) can be pivoted relative to the first region (54) of the housing (76) around a first axis (56), and conveyed material is conveyed through the conveying element past the first (54) and second region (68) towards the guide vanes (64), and wherein the guide vanes (64) can be pivoted relative to the first region (54) of the housing (76), separately from the second region (68) of the housing (76), around a second axis (58), which runs parallel to the first axis (56), and the guide vanes (64) are connected indirectly or directly to the first region (54) of the housing (76) or the second region (68) of the housing (76) through their pivoted mounting, **characterised in that** the housing (76) or the second region (68) of the housing (76) and the guide vanes (64) can be positively connected, in particular in a detent connection, to one another.

2. Distributor according to Claim 1, **characterised in that** the housing (76) or the second region (68) of the housing (76) and the guide vanes (64) can be connected to one another in a detent connection in such a way that in several detent positions an imaginary extension of a first, preferably lower, edge of the guide vanes (64) extends at least approximately tangentially to the path of movement of the conveyed material, which results from the conveying element interacting with the second region (68) of the housing (76).

3. Distributor according to one of Claims 1 to 2, **characterised in that** preferably at the side edge of the second region (68) or of the housing (76) a first detent element or several first detent elements is or are attached, which is or are arranged to interact with a complementary second detent element, in particular a rod (70) or a recess (92), connected to the guide vanes (64).

4. Distributor according to Claim 3, **characterised in that** the first detent elements contain recesses (72, 92), which in particular are spaced at different distances from the first axis (56) and the second axis (58).

5. Distributor according to one of Claims 1 to 4, **characterised in that** the second region (68) is substantially straight and the second axis (58) and the detent elements are positioned in such a way that an imaginary extension of a first edge of the guide vanes (64) intersects the first axis (56).

6. Distributor according to one of the preceding claims, **characterised in that** the second region (68) is coupled to the guide vanes (64) by slide elements (98) and/or a rod (70) engaging into recesses (72), for example, in such a manner that its position is dependent on the position of the guide vanes (64).

7. Distributor according to one of the preceding claims, **characterised in that** the chopping and conveying element comprises a drum (48) with knives (50) fastened thereto, which preferably interact with counter-blades (52).

8. Distributor according to one of the preceding claims, **characterised in that** at least one of the guide vanes (64) is curved, and that the end of this guide vane (64) remote from the conveying element is inclined with respect to the flow direction of the conveyed material.

9. Combination of a harvesting machine (10), in particular a combine harvester, and a distributor according to one of the preceding claims.

## Revendications

1. Dispositif de distribution d'un dispositif de hachage, comportant un carter (76), qui est muni d'une première partie (54) et d'une deuxième partie (68), un élément de hachage et de transport, agencé dans le carter (76), et plusieurs plaques de guidage (64) pour répandre transversalement le produit transporté, lesquelles sont disposées selon une position dans l'espace déterminée par rapport à la deuxième partie (68) du carter (76), la deuxième partie (68) du carter (76) étant apte à pivoter autour d'un premier axe (56) par rapport à la première partie (54) du carter (76) et le produit récolté étant transporté par l'élément de transport le long de la première (54) et de la deuxième partie (68) vers les plaques de guidage (64), et les plaques de guidage (64) étant aptes à pivoter par rapport à la première partie (54) du carter (76), séparément de la deuxième partie (68) du carter (76), autour d'un deuxième axe (58), qui est parallèle au premier axe (56), et les plaques de guidage (64) étant reliées par leur palier de pivotement directement ou indirectement avec la première partie (54) du carter (76) ou la deuxième partie (68) du carter (76), **caractérisé en ce que** le carter (76) ou la deuxième partie (68) du carter (76) et les plaques de guidage (64) peuvent être assemblés les uns aux autres par complémentarité de forme, en particulier par encliquetage.

2. Dispositif de distribution selon la revendication 1, **caractérisé en ce que** le carter (76) ou la deuxième partie (68) du carter (76) et les plaques de guidage (64) peuvent être encliquetés les uns dans les autres de telle sorte que, dans plusieurs positions de fixation, un prolongement imaginaire d'un premier bord, de préférence le bord inférieur des plaques de guidage (64), est au moins à peu près tangent à la trajectoire de mouvement du produit transporté, qui est obtenue par l'élément de transport en coopération avec la deuxième partie (68) du carter (76).

3. Dispositif de distribution selon l'une quelconque des revendications 1 à 2, **caractérisé en ce que**, de préférence sur le bord latéral de la deuxième partie (68) ou du carter (76), est ou sont agencé(s) un premier élément de fixation ou plusieurs éléments de fixation qui est ou sont réalisé(s) pour coopérer avec un deuxième élément de fixation complémentaire, en particulier une tige (70) ou un évidement (92), lequel est relié aux plaques de guidage (64).

4. Dispositif de distribution selon la revendication 3, **caractérisé en ce que** les premiers éléments de fixation contiennent des évidements (72, 92), qui sont situés en particulier à différentes distances du premier axe (56) et du deuxième axe (58).

5. Dispositif de distribution selon l'une quelconque des revendications 1 à 4, **caractérisé en ce que** la deuxième partie (68) est sensiblement droite et le deuxième axe (58) et les éléments de fixation sont positionnés de telle sorte qu'un prolongement imaginaire d'un premier bord des plaques de guidage (64) coupe le premier axe (56).

6. Dispositif de distribution selon l'une quelconque des revendications précédentes, **caractérisé en ce que** la deuxième partie (68), par exemple par l'intermédiaire d'éléments de glissement (98) et/ou d'une tige (70) s'engageant dans des évidements (72), est couplée avec les plaques de guidage (64) de telle sorte que sa position dépend de la position des plaques de guidage (64).

7. Dispositif de distribution selon l'une quelconque des revendications précédentes, **caractérisé en ce que** l'élément de hachage et de transport comporte un tambour (48) avec des couteaux (50) fixés contre celui-ci, lesquels coopèrent de préférence avec des contre-couteaux (52).

8. Dispositif de distribution selon l'une quelconque des revendications précédentes, **caractérisé en ce qu'**au moins l'une des plaques de guidage (64) est courbe et l'extrémité, opposée à l'élément de transport, de cette plaque de guidage (64) est chanfreinée par rapport à la direction du flux du produit transporté.

9. Combinaison formée par une machine de récolte (10), en particulier une moissonneuse-batteuse, et un dispositif de distribution selon l'une quelconque des revendications précédentes.
